# EUROPEAN PATENT APPLICATION

(11) **EP 4 737 423 A1**
(43) Date of publication of application: **06.05.2026**
(21) Application number: 24755351.4
(22) Date of filing: 01.07.2024
(51) Int. Cl.: C04B 26/16, C04B 26/14, C04B 26/18

(54) **PRINTABLE COMPOSITION FOR ADDITIVE OR SUBTRACTIVE MANUFACTURING, METHOD OF PRODUCTION THEROF AND RESPECTIVE USES**

(30) Priority: 29.06.2023 PT 2023118771
(71) Applicant: CENTITVC - Centro de Nanotecnologia e Materiais Tecnicos, Funcionais e Inteligentes, 4760-034 Vila Nova de Famalicão (PT); Solancis - Sociedade Exploradora de Pedreiras S.A., 2475-016 Benedita (PT)
(72) Inventor: FARIA PEIXOTO, Miguel Ângelo, 4760-034 Vila Nova de Famalicão (PT); DE MOURA RODRIGUES, Juliana Patrícia, 4760-034 Vila Nova de Famalicão (PT); COSTA DELGADO, Samuel, 2475-016 Benedita (PT); RIBEIRO ANICETO, Marco Aurélio, 2475-016 Benedita (PT)
(74) Representative: Patentree
(86) International application number: PCT/IB2024/056421
(87) International publication number: WO 2025/004017

(57) **Abstract**

The present description relates to a printable composition for additive or subtractive manufacturing, method of obtention and uses thereof.

The present description discloses a printable composition for additive manufacturing comprising at least 30% (w/w) of stone powder; at least 10% (w/w) of at least one polymer resin; at least one functional agent selected from a list consisting of colloidal silica, fibers, silanes, titanates, binding agent, thickeners, superplasticizers or combinations thereof; wherein the granulometry of the stone powder is less than 1 mm.

## Description

### TECHNICAL FIELD

The present disclosure relates to a printable composition for additive manufacturing (3D printing) or subtractive manufacturing, method of obtention and uses thereof. The composition includes stone powder, a polymer resin, and at least one functional agent, being suitable for creating articles with complex shapes and high mechanical strength.

The printable composition for additive or subtractive manufacturing of the present disclosure can be used to manufacture complex articles with a high content of natural stone, such as reinforcement of facade and flooring products, structures for reinforcing ornamental stones, decorative pieces or furniture.

### BACKGROUND

Geological resources are essential for modern society, as they constitute the raw material for a large number of economic activities, including a reasonable number of manufacturing industries.

The responsible exploitation of geological resources is an important means of development, being increasingly considered as a catalyst for improving the performance of economies, through the ecosystems of a circular economy, thus integrating economic, social, and environmental aspects.

The prevention of waste production and the encouragement of its reuse and recycling in order to extend its life cycle and develop circular economy strategies should increasingly become a priority for the sector, considering that the waste generated in this sector is one of the largest sources of waste within the European Union (EU), which is mainly characterized by material removed from the surface to enable exploitation, rock and mineral waste generated during activity, and the remnants after the end of exploitation.

Among the waste generated in the ornamental rocks sector, namely in stone processing, the stone powder, sludges from industrial wastewater treatment plants, landfill and stone scraps/trimmings stand out, which are destined for the construction industry or as filling material in the landscape restoration of quarries, as they are seen as a less noble material.

In the case of stone remnants, resulting from cuts of the final products and stone powder, resulting from various dusty activities in extraction and transformation, these residues have an inert inorganic nature, possessing the same composition/characteristics as the final products, having a different final destination.

Stone powder is generated during the various processes of extraction and transformation of ornamental rock. In the ornamental rock extraction sector, this dust can be generated in drilling, quarrying, loading, transportation, and material unloading processes. Regarding the processing sector, stone powder is essentially generated in the sawing, polishing, cutting, and finishing processes during the customization of the final product. In the sawing and cutting processes, the generation of this waste would be expected, however high water usage in stone cutting has prevented its formation. This powder is an inert residue considering it constitutes a fine fraction of the marketable product, it has the same composition. However, its most common destination currently is still in a landfill.

Document EP1415792B1 describes methods of three-dimensional printing and compositions for three-dimensional printing. The method described in said document includes the construction of cross sections of a three-dimensional article and the assembly of the individual cross sections in layers to form a final article. The individual cross sections are built using an inkjet print head to supply a fluid to a particulate material.

Document EP1272334B1 describes a system and method for three-dimensional printing materials that produce models of appearance and a small number of functional parts in an office environment. The method may include the construction of cross sections of a three-dimensional article and the assembly of the individual cross sections in layers to form a final article. Individual cross sections can be built using a printing head of an inkjet printer to apply an aqueous solvent or binding agent to a mixture of adhesive particles, causing the particles in the mixture to adhere to each other and to the previous cross sections. The binding agent may include at least one nonaqueous organic monomeric compound, an ionizable anionic polymer, a cationic polymer, a polymer, an aqueous colloid, or an inorganic solute.

Document EP1174471A1 describes a flexible and high hardness composite material consisting of an organic/inorganic composite material with at least 60% by weight of inorganic components, including an aggregate component, and having a Vickers surface hardness of at least 400 and a radius of curvature, in which the material is foldable without breaking, of at least R25 mm based on a plate body of 3 to 15 mm thickness, the organic/inorganic composite material being of high surface hardness, soft and foldable.

These facts are described in order to illustrate the technical problem solved by the embodiments of this document.

### GENERAL DESCRIPTION

The present disclosure relates to a printable composition for additive or subtractive manufacturing, method of obtention and uses thereof. The composition of this disclosure can be used in a variety of industrial applications, including civil construction and the creation of detailed architectural models. Improved mechanical strength and the surprising capacity of printing precision allow for use in environments that require high durability and precision.

It is an objective of the embodiments of the present disclosure to provide a technical solution for the reuse and value enhancement of sludge resulting from stone processing, for example limestone rock. As previously indicated, this sludge is currently wasted or sent to landfills, so it is extremely important to be able to reintroduce it on the market, thus ensuring an important contribution to the circular economy and reducing potential damage caused to ecosystems.

The printable composition for additive manufacturing is particularly useful in obtaining articles such as structures like reinforcing ornamental stones, decorative pieces or furniture.

In an embodiment, the sludge resulting from the stone processing can be treated by different chemical and physical processes to obtain a powder, which may further be hydrated or dehydrated, hereinafter referred to as stone powder.

The particle size/granulometry of stone powder can be measured in various ways, and in this disclosure, the particle size/granulometry was measured based on determining the particle size distribution by laser diffraction. This type of measurement is based on the fact that the angular distribution of light scattered by a particle, that is, its scattering pattern, depends on the size of the particle. When dispersion comes from a cloud or set of particles, the intensity of dispersion for any size class is related to the number of particles present in that size class and their optical properties. Within certain limits, the scattering pattern of a set of particles is identical to the sum of the individual scattering patterns of all particles. The theoretical patterns of dispersion of unit volumes of particles in selected size classes are used to solve the inverse problem, providing a volumetric particle size distribution. In order to determine the particle size distribution of the different samples of sludge resulting from stone processing, dispersion measurements were taken using Mastersizer 2000 equipment, coupled to a Hydro 2000S wet dispersion unit produced by Malvern. To do so, the samples were dispersed in deionized water and subjected to ninety seconds of ultrasound.

Throughout the present description and in order to present the values regarding the granulometry of the powder particles, the median diameter (D₅₀) measurement will be used. Throughout this disclosure, the median diameter (D₅₀) is considered to be the particle size corresponding to when the cumulative percentage reaches 50%. For example, for a powder sample with D₅₀ of 5 µm, it means that 50% of the particles are larger than 5 µm and 50% of the particles are smaller than 5 µm.

The solution described here presents the development of new printable stone powder composites and polymer binders and/or hydraulic binders and other additives. The solution must allow the use of various manufacturing methods, including additive manufacturing processes, and the composite must have the ideal rheological properties for the process and the mechanical and durability characteristics required in the construction sector. Depending on the constituents of the composite, the material can be used for different applications, with the reinforcement of facade and flooring products being one of the most important.

One aspect of the present disclosure relates to a printable composition for additive manufacturing or 3D printing comprising at least 30% (w/w) of stone powder; at least 10% (w/w) of at least one polymer resin and at least one functional agent selected from a list consisting of colloidal silica, fibers (e.g., polymer fibers, carbon fibers or combinations thereof), silanes, titanates, binding agent, superplasticizers, thickeners, or combinations thereof; wherein the granulometry of the stone powder is less than 1 mm.

The composition of this disclosure includes stone powder, at least one polymer resin, and functional agents in a printable composition for additive manufacturing. This innovative combination surprisingly overcomes the limitations of current technologies by providing a solution that allows for 3D printing of articles with high mechanical strength. The specific selection of materials and the precision in the granulometry of the stone powder, combined with the method of obtention, result in a unique composition that offers significant improvements in the durability and versatility of the final products, expanding the scope and applications of 3D printing in sectors such as construction, decoration, and manufacturing of functional parts.

The viscosity and rheological capabilities of the composition of the present disclosure are improved, allowing for quick printing of complex shapes with a high amount of stone. With the composition of this disclosure, structures with complex geometries can be created, such as for example honeycomb, grids, zig-zag, cubic filling, gyroid, among others.

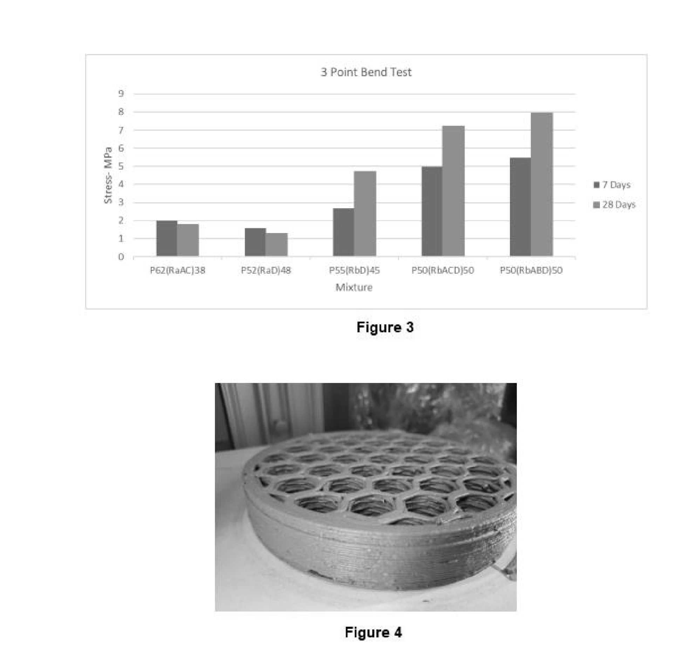

In an embodiment for better results, the use of different resins helps the rheological and mechanical properties of the composites obtained. As noted in Figure 3, the water-based polyurethane resin (Ra) has a lower performance compared to the water-based polyurethane resin reinforced with fibers (Rb) in flexural stress tests, with maximum values of 2 MPa vs 8 MPa, even with the use of additives that enhance mechanical strength.

In an embodiment for better results, the viscosity of the composition of the present disclosure is above 200 Pa.s at 20°C, preferably between 200-1000 Pa.s at 20°C.

The viscosity measurement of the layer can be carried out in several ways; in this presentation, the viscosity measurement was performed on a TA Instruments TA HR10 equipment at 20°C.

In an embodiment for better results, the polymer resin used in the printable composition is a water-based polymer resin, or epoxy, or mixtures thereof.

In an embodiment for better results, the polymer resin used in the printable composition is selected from a list consisting of polyurethane, polypropylene, polyester, epoxy, or combinations thereof; preferably polyurethane.

In an embodiment for better results, the printable composition comprises at least 20% (w/w) of polymer resin.

In an embodiment for better results, the printable composition comprises from 20 to 55% (w/w) of polymer resin, preferably from 35 to 50% (w/w) of polymer resin, more preferably from 40 to 45% (w/w) of polymer resin.

In an embodiment for better results, the printable composition comprises from 30 to 70% (w/w) of stone powder, preferably from 40 to 55% (w/w) of stone powder, more preferably from 40 to 50% (w/w) of stone powder.

In an embodiment for better results, the stone powder used in the printable composition is selected from a list consisting of: limestone, granite, basalt, marble or combinations thereof.

In an embodiment for better results, the thickener of the printable composition is selected from a list consisting of: cellulosic organics, associative or non-associative type synthetics, inorganics or combinations thereof.

In an embodiment for better results, the superplasticizer of the printable composition is selected from a list consisting of: modified lignosulfonates, sulfonated synthetic polymers, polyacrylate polymers or combinations thereof.

In an embodiment for better results, the stone powder used in the printable composition has a granulometry with a size smaller than 0.5 mm, preferably less than 90 µm.

In an embodiment for better results, the stone powder used in the printable composition has a median diameter (D₅₀) comprised between 3 and 90 µm.

In an embodiment for better results, the stone powder used in the printable composition has a granulometry with a median diameter (D₅₀) comprised between 3 and 88 µm, preferably between 4 and 86 µm, more preferably between 5 and 85 µm.

In an embodiment for better results, the printable composition comprises 1 to 20% (w/w) of functional agent, preferably from 3 to 10% (w/w) of functional agent, more preferably from 5 to 8% (w/w) of functional agent.

In an embodiment for better results, the functional agent used in the printable composition is selected from a list consisting of colloidal silica, fibers, silanes, or combinations thereof. Preferably colloidal silica and/or fibers.

In an embodiment for better results, the printable composition further comprises an additive; preferably a dye, a surfactant, an anti-corrosive agent, an anti-foaming agent, a flame retardant or other functional agent.

In an embodiment for better results, the printable composition further comprises at least one fiber, preferably wherein the fiber is selected from a list consisting of: polypropylene, polyester, polyamide, carbon, of natural or regenerated base, or combinations thereof; even more preferably wherein the largest dimension of the fiber is less than 20mm; preferably between 5mm and 10mm.

The present application also describes an article comprising the printable composition for additive manufacturing previously described, preferably a structure of ornamental stones reinforcement, decorative pieces or furniture.

In an embodiment, the article further comprises a coating.

A method is also disclosed for obtaining a printable composition for additive manufacturing comprising the steps of treatment of the sludge resulting from stone processing and formulation of the stone powder with a polymer resin and at least one functional agent.

A method is also disclosed for obtaining a printable composition for additive manufacturing comprising the homogeneous mixture: of at least 30% (w/w) of stone powder with at least 10% (w/w) of a polymer resin and at least one functional agent.

In an embodiment, stone powder is added in the form of sludge resulting from stone processing.

In an embodiment, the treatment of sludge resulting from stone processing comprises drying and/or crushing and/or screening.

In an embodiment, the curing of the manufactured article is performed at room temperature.

Also described is the use of the printable composition according to any of the preceding claims in additive manufacturing applications requiring high mechanical strength and dimensional accuracy, preferably in civil construction.

### BRIEF DESCRIPTION OF THE DRAWINGS

For an easier understanding, figures are herein attached, which represent preferred embodiments that are not intended to limit the object of the present description.
**Figure 1** - Photographic illustration of two unprinted examples from the state of the art of distinct low-density solutions for reinforcing limestone-origin stone tiles. One of the solutions uses low-density mortars while the other features an aluminum honeycomb layer; the second also includes overlapping layers of fiberglass.
**Figure 2** - Schematic representation of the steps for reinforcing ornamental stone using the formulation developed and manufactured through additive manufacturing techniques.
**Figure 3** - Graphic representation of the result of different formulations when requested in a 3-point bending test. The formulations are composed of different resins - Water-based polyurethane resin (Ra) and Water-based polyurethane resin reinforced with fibers - and present unequal data regarding flexural stress, with the highest value being 8 MPa, while in cases with less interesting results, this value is around 2 MPa.
**Figure 4** - Representation of an embodiment of a composite via 3D printing.

### DETAILED DESCRIPTION

The present description relates to a printable composition for additive or subtractive manufacturing, method of obtention and uses thereof.

In an embodiment, the printable composition for additive manufacturing or 3D printing comprises at least 30% (w/w) of stone powder; a polymer resin, and at least one functional agent selected from a list consisting of colloidal silica, fibers, silanes, titanates, binding agent, superplasticizers, thickeners, or combinations thereof; wherein the granulometry of the stone powder is less than 1 mm.

In an embodiment, the printable composition for additive manufacturing or 3D printing comprises at least 30% (w/w) of stone powder; at least 10% (w/w) of at least one polymer resin, and at least one functional agent selected from a list consisting of colloidal silica, fibers, silanes, titanates, binding agent, superplasticizers, thickeners, or combinations thereof; wherein the granulometry of the stone powder is less than 1 mm.

In an embodiment, the polymer resin used in the printable composition is a water-based polymer resin, or epoxy, or mixtures thereof.

In an embodiment, the polymer resin used in the printable composition is selected from a list consisting of polyurethane, polypropylene, polyester, epoxy, or combinations thereof; preferably polyurethane.

In an embodiment, the printable composition comprises at least 20% (w/w) of polymer resin.

In an embodiment, the printable composition comprises from 20to 55% (w/w) of polymer resin, preferably from 35 to 50% (w/w) of polymer resin, more preferably from 40 to 45% (w/w) of polymer resin.

In an embodiment, the printable composition comprises from 30 to 70% (w/w) of stone powder, preferably from 40 to 55% (w/w) of stone powder, more preferably from 40 to 50% (w/w) of stone powder.

In an embodiment, the stone powder used in the printable composition is selected from a list consisting of: limestone, granite, basalt, marble or combinations thereof.

In an embodiment for better results, the thickener of the printable composition is selected from a list consisting of: cellulosic organics, associative or non-associative type synthetics, inorganics or combinations thereof.

In an embodiment for better results, the superplasticizer of the printable composition is selected from a list consisting of: modified lignosulfonates, sulfonated synthetic polymers, polyacrylate polymers or combinations thereof.

In an embodiment, the stone powder used in the printable composition has a granulometry with a size smaller than 0.5 mm, preferably less than 90 µm.

In an embodiment, the stone powder of the printable composition has a median diameter (D₅₀) comprised between 3 and 90 µm.

In an embodiment, the stone powder used in the printable composition has a granulometry with a median diameter (D₅₀) comprised between 3 and 88 µm, preferably between 4 and 86 µm, more preferably between 5 and 85 µm.

In an embodiment, the printable composition comprises 1 to 20% (w/w) of functional agent, preferably from 3 to 10% (w/w) of functional agent, more preferably from 5 to 8% (w/w) of functional agent, for better results.

In an embodiment, the printable composition comprises the addition of at least one fiber, for a higher mechanical strength.

In an embodiment, the fiber used in the printable composition is selected from a list consisting of polypropylene, polyester, polyamide, carbon, of natural or regenerated base, or combinations thereof.

In an embodiment, the printable composition further comprises an additive; preferably a dye, a surfactant, an anti-corrosive agent, an anti-foaming agent, a flame retardant or other functional agent.

The present disclosure also describes an article comprising the printable composition for additive manufacturing also described in this same disclosure. As examples of embodiments of articles, it is possible to indicate the reinforcement of facade and floor products as one of the most important, preferably a reinforcement structure of ornamental stones, decorative pieces or furniture.

In an embodiment, the polymer resin used in the printable composition is a water-based or epoxy-based polymer resin; preferably the polymer resin is selected from a list consisting of polyurethane, polypropylene, polyester, epoxy, or combinations thereof.

In an embodiment, the printable composition further comprises at least one fiber, preferably wherein the fiber is selected from a list consisting of: polypropylene, polyester, polyamide, carbon, of natural or regenerated base, or combinations thereof; even more preferably wherein the largest dimension of the fiber is less than 20mm.

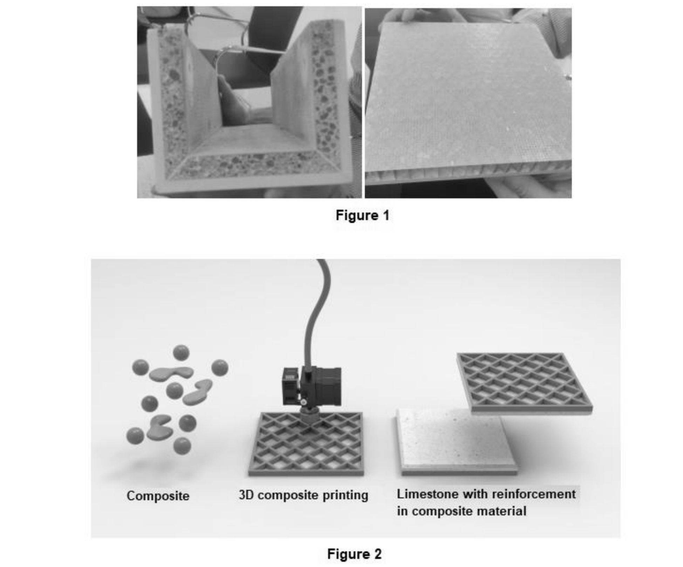

In an embodiment, the article is obtained by additive manufacturing methods, through 3D printing, with the composition of the present disclosure, it is possible to obtain very complex parts with a composite having a high content of natural stone and stone reinforcement such as in a mesh (fig 2, fig 4 for example).

In an embodiment, the article is obtained by subtractive manufacturing methods after deposition in a mold, without using pressure.

In an embodiment, the article comprises a coating, either for purely aesthetic or functional reasons.

The present application also describes a method for obtaining a printable composition for additive manufacturing comprising the steps of treating the sludge resulting from stone processing and formulating the stone powder with a polymer resin and at least one functional agent.

Also disclosed is a method for obtaining a printable composition for additive manufacturing comprising the homogeneous mixture: of at least 30% (w/w) of stone powder with at least 10% (w/w) of a polymer resin and at least one functional agent, such as colloidal silica.

In an embodiment, stone powder is added in the form of sludge resulting from stone processing.

In an embodiment, the treatment of sludge resulting from stone processing used in the method comprises drying and/or crushing and/or screening. In an embodiment, and to achieve better results, the stone powder is dehydrated.

In an embodiment, the article is cured at room temperature, i.e. at an approximate temperature of 25°C and 50-60% humidity, and after about 14 days, the curing is practically completed, and at the end of 28 days it will be stabilized.

The connection between the stone and the printed structure is made through an adhesion-promoting resin that is applied by brush to the surface to be glued.

Also described is the use of the printable composition according to any of the preceding claims in additive manufacturing applications requiring high mechanical strength and dimensional accuracy, preferably in civil construction.

**Table 1 - characterization of composition and mechanical properties**

| Type of stone/quantity | Resin/quantity | Functional agency/ quantity | Flexural resistance postcuring |
|---|---|---|---|
| Limestone (50%) | Rb (45%) | Colloidal silica (5%) | 6.7 MPa |
| Limestone (50%) | Rb (44%) | Colloidal silica (5%) and Silane (1%) | 7.4 MPa |
| Limestone (50%) | Rb (43%) | Colloidal silica (5%) and Silane (2%) | 7.9 MPa |
| Limestone (45%) | Rb (54%) | Superplasticizer (1%) | 4.5 MPa |
| Limestone (55%) | Rb (45%) | | 4.7 MPa |
| Limestone (50%) | Rb (44%) | Colloidal silica (5%) and Superplasticizer (1%) | 7.2 MPa |
| Limestone (62%) | Ra (31%) | Colloidal silica (7%) | 2.6 MPa |
| Limestone (52%) | Ra (48%) | | 1.3 MPa |
| Limestone (55%) | Ra (43%) | Superplasticizer (1%) and Silane (1%) | 2.9 MPa |

The term "comprises" or "comprising" whenever used in this document is intended to indicate the presence of stated features, elements, integers, steps, and components, but not to preclude the presence or addition of one or more other features, elements, integers, steps, and components, or groups thereof.

The present invention is of course in no way restricted to the embodiments described in this document and a person with average skills in the art may foresee many possibilities for modification thereof and for substitutions of technical features by other equivalent ones, depending on the requirements of each situation, as defined in the appended claims.

The following claims define additional embodiments of the present description.

## Claims

1. Printable composition for additive or subtractive manufacturing comprising at least 30% (w/w) of stone powder;
at least 10% (w/w) of at least one polymer resin;
at least one functional agent selected from a list consisting of colloidal silica, fibers, silanes, titanates, binding agent, thickeners, superplasticizers or combinations thereof;
wherein the granulometry of the stone powder is less than 1 mm.

2. Printable composition according to any one of the previous claims, wherein the polymer resin is a water-based polymer resin, or epoxy, or mixtures thereof.

3. Printable composition according to any one of the previous claims, wherein the polymer resin is selected from a list consisting of polyurethane, polypropylene, polyester, epoxy, or combinations thereof; preferably polyurethane.

4. Printable composition according to any one of the previous claims, comprising at least 20% (w/w) of polymer resin.

5. Printable composition according to any one of the previous claims, comprising from 20 to 55% (w/w) of polymer resin, preferably from 35 to 50% (w/w) of polymer resin, more preferably from 40 to 45% (w/w) of polymer resin.

6. Printable composition according to any one of the previous claims, comprising from 30 to 70% (w/w) of stone powder, preferably from 40 to 55% (w/w) of stone powder, more preferably from 40 to 50% (w/w) of stone powder.

7. Printable composition according to any one of the previous claims, wherein the stone powder is selected from a list consisting of: limestone, granite, basalt, marble or combinations thereof.

8. Printable composition according to any one of the previous claims, wherein the thickener is selected from a list consisting of: cellulosic organics, associative or non-associative type synthetics, inorganics or combinations thereof.

9. Printable composition according to any one of the previous claims, wherein the superplasticizer is selected from a list consisting of: modified lignosulfonates, sulfonated synthetic polymers, polyacrylate polymers or combinations thereof.

10. Printable composition according to the previous claim, wherein the stone powder has a granulometry with a size smaller than 0.5 mm, preferably less than 90 µm.

11. Printable composition according to any one of the previous claims, wherein the stone powder has a median diameter (D₅₀) comprised between 3 and 90 µm.

12. Printable composition according to any one of the previous claims, wherein the stone powder has a granulometry with a median diameter (D₅₀) comprised between 3 and 88 µm, preferably between 4 and 86 µm, more preferably between 5 and 85 µm.

13. Printable composition according to any one of the previous claims, comprising 1 to 20% (w/w) of functional agent, preferably from 5 to 10% (w/w) of functional agent, more preferably from 5 to 8% (w/w) of functional agent.

14. Printable composition according to any one of the previous claims, wherein the functional agent is selected from a list consisting of colloidal silica; fibers, such as carbon/polymeric fibers; silanes; or combinations thereof.

15. Printable composition according to any one of the previous claims further comprising an additive; preferably a dye, a surfactant, an anti-corrosive agent, an anti-foaming agent, a flame retardant or other functional agent.

16. Printable composition according to any one of the previous claims, further comprising at least one fiber, preferably wherein the fiber is selected from a list consisting of: polypropylene, polyester, polyamide, carbon, of natural or regenerated base, or combinations thereof; even more preferably wherein the largest dimension of the fiber is less than 20mm.

17. Printable composition according to any one of the previous claims, comprising a viscosity above 200 Pa.s at 20°C, preferably between 200-1000 Pa.s at 20°C.

18. Article comprising the printable composition for additive manufacturing described in any one of the previous claims, preferably a structure of reinforcement of ornamental stones, decorative pieces or furniture.

19. Article according to the previous claim, comprising a coating.

20. Method for obtaining a printable composition for additive manufacturing as described in any one of claims 1 to 17, comprising the homogeneous mixture: of at least 30% (w/w) of stone powder with at least 10% (w/w) of at least one polymer resin and at least one functional agent.

21. Method according to the previous claim, wherein the stone powder is added in the form of sludge resulting from stone processing.

22. Method according to claim 20, wherein the treatment of sludge resulting from stone processing comprises drying and/or crushing and/or screening.

23. Use of the printable composition according to any one of claims 1 to 17 in additive and/or subtractive manufacturing applications requiring high mechanical strength, preferably in civil construction.
